# EUROPÄISCHE PATENTSCHRIFT

(11) **EP 3 057 442 B1**
(45) Veröffentlichungstag und Bekanntmachung des Hinweises auf die Patenterteilung: **29.03.2017**
(21) Anmeldenummer: 14786603.2
(22) Anmeldetag: 02.10.2014
(51) Int. Cl.: A23L 2/46, B67C 3/04

(54) **VERFAHREN UND VORRICHTUNG ZUR VORERWÄRMUNG EINES PUMPFÄHIGEN LEBENSMITTELPRODUKTS IN EINER HEISSABFÜLLUNG MIT EINER WÄRMEPUMPE**
METHOD AND DEVICE FOR PREHEATING A PUMPABLE FOOD PRODUCT IN HOT FILLING WITH A HEAT PUMP
PROCÉDÉ ET DISPOSITIF POUR PRÉCHAUFFAGE DES PRODUITS ALLIMENTAIRES DANS UN SOUTIRAGE À CHAUD AVEC UNE THERMOPOMPE

(30) Priorität: 17.10.2013 DE 102013017330
(43) Veröffentlichungstag der Anmeldung: 24.08.2016
(73) Patentinhaber: GEA TDS GmbH, 31157 Sarstedt (DE)
(72) Erfinder: WIEDENMANN, Heinz-Dieter, 31134 Hildesheim (DE)
(74) Vertreter: Hauck Patentanwaltspartnerschaft mbB
(86) Internationale Anmeldenummer: PCT/EP2014/002681
(87) Internationale Veröffentlichungsnummer: WO 2015/055283

(56) Entgegenhaltungen:
- EP-A1- 2 532 247
- DE-A1-102007 003 976
- GB-A- 1 300 789

## Beschreibung

### TECHNISCHES GEBIET

Die Erfindung betrifft ein Verfahren zur Vorerwärmung eines pumpfähigen Lebensmittelprodukts, insbesondere Getränke oder Säfte, in einer Heißabfüllanlage mit einer Wärmepumpe, mit einem Erhitzer zur Erhitzung des Lebensmittelprodukts auf eine Füll-Temperatur, einem dem Erhitzer vorgeschalteten Vorwärmer zur Vorwärmung für das Lebensmittelprodukt, einem Füller zum Abfüllen des Lebensmittelprodukts in Behältnisse, beispielsweise Flaschen, Beutel oder Kunststoffbehältnisse, einem Kühltunnel zur Abkühlung der heiß abgefüllten Behältnisse mit einem Kühlmittel, beispielsweise Wasser, das in einem Kühlmittel-Kreislauf über den Vorwärmer und den Kühltunnel geführt wird, mit dem Vorwärmer, der Wärmeenergie des bei der Abkühlung der Behältnisse erwärmten Kühlmittels des Kühltunnels dem Lebensmittelprodukt zuführt, mit einer separaten Wärmepumpe, beispielsweise einer elektrisch angetriebenen Kompressionswärmepumpe, die die Restwärmeenergie des aus dem Vorwärmer abströmenden Kühlmittels primärseitig dazu benutzt, um mit einem Wärmeträgermittel, beispielsweise Wasser, das in einem Wärmeträgermittel-Kreislauf sekundärseitig über die Wärmepumpe geführt ist, die Temperatur des vorgewärmten Lebensmittelprodukts weiter zu erhöhen. Die Erfindung betrifft weiterhin eine Vorrichtung zur Durchführung des Verfahrens.

### STAND DER TECHNIK

Die durch das gattungsgemäße Verfahren definierte sogenannte Heißabfüllung ist hinlänglich bekannt und dient dazu, die genannten Lebensmittelprodukte in Behältnisse, beispielsweise Flaschen, Beutel oder Kunststoffbehältnisse, heiß abzufüllen und dadurch nach Abkühlung und geeigneter Weiterbehandlung über einen längeren Zeitraum dort haltbar zu bevorraten. In der Regel werden diese Lebensmittelprodukte mittels einer thermischen Behandlung in einem Vorwärmer und einem diesem nachgeordneten Erhitzer (Pasteurisierung, Erhitzung, Kurzzeiterhitzung) vorbehandelt, bevor sie einem Füller oder einer Füllstation zugeführt und dort in die Behältnisse heiß abgefüllt werden. Die abgefüllten Behältnisse werden dann verschlossen und mittels eines Kühlmittels, beispielsweise Wasser, durch Berieselung im Durchlauf durch einen Kühltunnel, der beispielsweise aus mehreren in Durchlaufrichtung nebeneinander angeordneten Kühlzellen bestehen kann, auf eine zur Lagerung und/oder Weiterverarbeitung geeignete Temperatur gekühlt. Das Kühlmittel nimmt dabei Wärme aus den abzukühlenden Behältnissen auf und erwärmt sich dabei. Zur Nutzung dieser Wärme wird das Kühlmittel im Kreislauf über den Vorwärmer gegen das zu erwärmende Lebensmittelprodukt gefahren. Den jeweiligen Mengenstrom- und Temperaturverhältnissen entsprechend erwärmt sich das Lebensmittelprodukt dabei, während das Kühlmittel eine entsprechende Abkühlung erfährt.

Die Rückkühlung des Kühlmittels erfolgt in der Regel ebenfalls in einem Wärmetauscher (Kühler), der mit Kühlturmwasser betrieben wird, oder direkt in einem Kühlturm mit einem nachgeschalteten Wärmetauscher. Die durch die Kühlung abzuführende Wärmeenergie ist als Verlust anzusehen. Die Rückkühlung von nicht abgefülltem Lebensmittelprodukt erfolgt in der Regel ebenfalls in einem weiteren Wärmetauscher (Kühler), der in gleicher Weise, wie vorstehend beschrieben, betrieben werden kann. Diese Wärmeenergie ist ebenfalls als Verlust anzusehen.

Das grundlegende Problem ist die Gegebenheit, dass die verfügbare Wärmeenergie, die für die Erhitzung des Lebensmittelprodukts erforderlich ist, nur begrenzt von den abgefüllten Behältnissen mittels des Kühlmittels auf das zulaufende und zu erhitzende Lebensmittelprodukt übertragen werden kann. Die restliche Wärmeenergie, die zur finalen Behandlung des Lebensmittelprodukts bis zum Erreichen der notwendigen Füll-Temperatur erforderlich ist, muss dem Lebensmittelprodukt extern zugeführt werden, beispielsweise über Dampf oder Druckheißwasser.

Jene Wärmeenergie des Lebensmittelprodukts, die durch die Temperaturdifferenz zwischen seiner erforderlichen Füll-Temperatur und seiner durch das im Kreislauf geführte Kühlmittel erreichbaren Vorwärmtemperatur repräsentiert wird, ist grundsätzlich als Verlustwärme anzusehen und findet im Wesentlichen in den vorstehend erwähnten Verlusten ihre konkrete Ausprägung. Die Verwendung eines Kühlturms zur Rückkühlung des im Kreislauf geführten Kühlmittels bzw. zur Vorkühlung von frischem Kühlmittel ist wegen des Temperaturniveaus der über die Umgebung bereitstellbaren Kühlmedien technisch limitiert.

Ein Verfahren der gattungsgemäßen Art und eine Vorrichtung zu seiner Durchführung sind aus der EP 2 532 247 A1 bekannt. Das bekannte Verfahren zeichnet sich in einer gattungsgemäßen Variante (Figur 3 der EP 2 532 247 A1) dadurch aus, dass die Flüssigkeit auf die von einer Füllstation geforderte Füll-Temperatur durch einen Kurzzeiterhitzer erhitzt wird, der, bezogen auf die zu erhitzende und heiß abzufüllende Flüssigkeit, aus einem als Vorwärmer fungierenden Wärmetauscher und einem mit diesem in Reihe geschalteten, als finaler Erhitzer fungierenden weiteren Wärmetauscher besteht. Zur verbesserten Ausnutzung der Wärmeenergie, die beim Abkühlvorgang der den Kühltunnel durchlaufenden Behälter über die Kühlflüssigkeit des Kühltunnels anfällt, ist zum Erwärmen der Flüssigkeit vor der Abfüllung der Vorwärmer in Reihe mit der Wärmepumpe derart vorgesehen, dass die erwärmte Kühlflüssigkeit vom Kühltunnel zum Vorwärmer und danach zur Wärmepumpe gelangt, sodass zumindest ein Teil der Wärmeenergie der erwärmten Kühlflüssigkeit zunächst mittels des Vorwärmers an die zu erwärmende Flüssigkeit übertragen werden kann. Danach kann wenigstens ein weiterer Teil der Wärmeenergie mittels der Wärmepumpe an den finalen Erhitzer zur weiteren Erwärmung der Flüssigkeit übertragen werden.

Dabei bleibt festzustellen, dass das Erwärmen der Flüssigkeiten auf die jeweilige finale Füll-Temperatur unmittelbar, abschließend und ausschließlich durch die mittels der Wärmepumpe, beispielsweise einer elektrisch angetriebenen Kompressionswärmepumpe, zugeführte Wärmeenergie geschieht. Nun ist aber bekannt, dass die Leistungszahl COP (Coefficient of Performance), das Verhältnis von zugeführter elektrischer Antriebsleistung zu transferierter Wärmeleistung, signifikant von der durch die Wärmepumpe zu verwirklichenden maximalen Heiztemperatur, im vorliegenden Falle von der finalen Füll-Temperatur, in einem umgekehrten Verhältnis abhängt, d.h. je höher die Heiztemperatur ist, umso niedriger ist die Leistungszahl.

Das einleitend beschriebene bekannte Verfahren zur Vorwärmung eines pumpfähigen Lebensmittelprodukts und die Vorrichtung zu seiner Durchführung verzichten auf den Einsatz einer Wärmepumpe. Diese nutzen die bei der Abkühlung der Behältnisse im Kühltunnel im Kühlmittel anfallende Wärmeenergie teilweise dadurch aus, dass das erwärmte Kühlmittel über einen das Lebensmittelprodukt erwärmenden Vorwärmer geführt wird. Die weitere Abkühlung des Kühlmittels auf eine am Eintritt in den Kühltunnel geforderte Eintrittstemperatur erfolgt dann über einen Kühler, der seine Kühlleistung von einem Kühlturm oder über kaltes Frischwasser bezieht.

Die DE 10 2007 003 919 A1 beschreibt ein Verfahren sowie eine Vorrichtung zur Pasteurisierung von abgefüllten Lebensmitteln, beispielsweise für die Pasteurisierung von Fruchtsäften, Bieren oder sonstiger in Behältnissen wie Flaschen oder Dosen abgefüllten Lebensmitteln. Die Behältnisse werden dabei durch eine Pasteurisierstraße transportiert, entlang derer die Behältnisse in einer Aufheizzone sukzessive mit Heißwasser mit einer derartigen Temperaturverteilung in Kontakt gebracht werden, dass die in den Behältnissen abgefüllten Lebensmittel ein vorgegebenes Pasteurisierungs-Temperaturniveau für eine vorgegebene Dauer erreichen und im weiteren Verlauf der Pasteurisierstraße in einer Abkühlzone durch Kontakt mit Kühlwasser wieder abgekühlt werden. Darüber hinaus wird das sich durch die Restwärme der Produkte erwärmende Kühlwasser dazu benutzt, die Temperatur des Heißwassers wenigstens in einem Teilbereich der Aufheizzone mittels einer Wärmepumpe zu erhöhen.

Das Verfahren und die Vorrichtung gemäß EP 2 532 247 A1 weist zwar eine deutlich bessere Leistungszahl auf als das einleitend beschriebene Verfahren und die Vorrichtung ohne Wärmepumpe, jedoch ist die mit der Wärmepumpe erzielte Nutzung der verfügbaren Wärmeenergie noch nicht befriedigend und damit verbesserungsfähig.

Es ist Aufgabe der vorliegenden Erfindung, ein Verfahren und eine Vorrichtung zur Vorerwärmung eines pumpfähigen Lebensmittelprodukts, insbesondere Getränke oder Säfte, in einer Heißabfüllanlage mit einer Wärmepumpe der gattungsgemäßen Art derart weiterzuentwickeln, dass die Nutzung der verfügbaren Wärmeenergien gegenüber dem Stand der Technik weiter verbessert ist.

### ZUSAMMENFASSUNG DER ERFINDUNG

Diese Aufgabe wird durch ein Verfahren mit den Merkmalen des Anspruchs 1 gelöst. Vorteilhafte Ausgestaltungen des Verfahrens sind Gegenstand der Unteransprüche. Eine Vorrichtung zur Durchführung des erfindungsgemäßen Verfahrens ist durch die Merkmale des Anspruchs 9 gekennzeichnet. Vorteilhafte Ausführungsformen der Vorrichtung sind Gegenstand der Unteransprüche.

Der erfinderische Grundgedanke besteht darin, die bei der Erwärmung des Lebensmittelprodukts zu erreichende finale Füll-Temperatur nicht unmittelbar, abschließend und ausschließlich durch den über die Sekundärseite der Wärmepumpe geführten Wärmeträgermittel-Kreislauf bereitzustellen, wie dies aus dem Stand der Technik bekannt ist, wodurch der finale Erhitzer durch die Wärmepumpe substituiert ist, sondern die verfügbare Wärmeenergie unterhalb der Füll-Temperatur und damit mit einer höchstmöglichen Leistungszahl der weiteren Vorwärmung des Lebensmittelprodukts zuzuführen. Dies geschieht erfindungsgemäß dadurch, dass der Wärmeträgermittel-Kreislauf über einen dem ersten Vorwärmer nachgeschalteten und dem Erhitzer vorgeschalteten zweiten Vorwärmer für das Lebensmittelprodukt geführt ist. Auf diese Weise erfolgt in dem zweiten Vorwärmer mit der von der Wärmepumpe sekundärseitig mittels des Wärmeträgermittels bereitgestellten Wärmeenergie eine weitere Vorwärmung des Lebensmittelprodukts planmäßig auf eine Temperatur unterhalb der Füll-Temperatur.

Dadurch wird dem Rücklauf des Kühlmittel-Kreislaufs nach dem ersten Vorwärmer mittels der Primärseite der Wärmepumpe Wärme entzogen (Kühlen) und mittels der Sekundärseite der Wärmepumpe Wärme auf den Wärmeträgermittel-Kreislauf übertragen (Heizen). Durch die Entnahme der Wärme durch die Wärmepumpe wird das Kühlmittel im Kühlmittel-Kreislauf gekühlt und gleichzeitig wird durch die Wärmepumpe unter Zuführung elektrischer Antriebsleistung das Wärmeträgermittel im Wärmeträgermittel-Kreislauf auf ein zur weiteren Vorwärmung des Lebensmittelprodukts im zweiten Vorwärmer nutzbares Temperaturniveau so weit aufgeheizt, dass eine höchstmögliche Leistungszahl der Wärmepumpe sichergestellt ist.

Die Wärmepumpe ist bevorzugt als Kompressionswärmepumpe ausgeführt, wobei eine vorteilhafte Ausgestaltung des Verfahrens vorsieht, dass die Wärmepumpe als zweistufige Kompressionswärmepumpe ausgebildet und gleichzeitig zum effizienten Heizen und Kühlen befähigt ist. Eine diesbezügliche Wärmepumpe wird auch als transkritische Wärmepumpe bezeichnet, die beispielsweise bei einer Heiztemperatur von 82 °C eine Leistungszahl COPh = 6 aufweist.

Diese an sich bekannte Wärmepumpe arbeitet gemäß einer bevorzugten Verfahrensausgestaltung mit natürlichen Kältemitteln wie Ammoniak (NH₃) oder Kohlendioxid (CO₂) und jeweils bevorzugt im transkritischen Bereich. Sie ist in der Firmendruckschrift des GEA Konzerns, GEA Refrigeration Technologies, "In Touch with GEA Refrigeration Technologies - 08/2012" beschrieben. Diesbezügliche natürliche Kältemittel besitzen kein Ozon abbauendes Potenzial und tragen daher nicht zum sog. Treibhauseffekt bei.

Um eine hohe Leistungszahl der Wärmepumpe zu erreichen, sieht eine vorteilhafte Ausgestaltung des vorgeschlagenen Verfahrens vor, dass sich die Vorwärmung des Lebensmittelprodukts auf eine Temperatur unterhalb der Füll-Temperatur beschränkt und dass die Erhitzung des Lebensmittelprodukts auf die Füll-Temperatur in dem Erhitzer mittels extern zugeführter Wärmeenergie erfolgt. Diese Wärmeenergie wird vorzugsweise über Dampf oder Druckheißwasser bereitgestellt.

Es wird weiterhin vorgeschlagen, dass im Kühlmittel-Kreislauf zwischen Wärmepumpe und Kühltunnel ein erster Kühler vorgesehen ist, der bei Bedarf und unabhängig von der Wärmepumpe eine zum Betrieb des Kühltunnels erforderliche erste Kühlmittel-Temperatur exakt bereitstellt oder eine Anpassung an diese erleichtert.

Die Leistungsregelung der Wärmepumpe wird vereinfacht, wie dies eine andere Ausgestaltung des Verfahrens vorsieht, wenn im Wärmeträgermittel-Kreislauf zwischen dem zweiten Vorwärmer und der Wärmepumpe eine Kühlung des Wärmeträgermittels auf eine abgesenkte zweite Wärmeträgermittel-Temperatur vorgesehen ist. Dadurch kann die Eintrittstemperatur des Wärmeträgermittels in die Wärmepumpe verändert und an veränderte Betriebsbedingungen leicht angepasst werden.

Es wird weiterhin vorgeschlagen, dass durch Leistungsregelung der Wärmepumpe eine Anpassung des Verfahrens an variable Verfahrensparameter durchgeführt wird.

Das vorgeschlagene Verfahren findet besonders vorteilhaft Anwendung auf pumpfähige Lebensmittelprodukte, wie Getränke oder Säfte.

Die Erfindung umfasst ferner eine Vorrichtung zur Durchführung des Verfahrens zur Vorerwärmung eines pumpfähigen Lebensmittelprodukts in einer Heißabfüllanlage mit einer Wärmepumpe. Sie besteht aus einem Erhitzer, einem, in Fließrichtung des Lebensmittelprodukts gesehen, diesem vorgeschalteten zweiten Vorwärmer, einem letzteren vorgeschalteten ersten Vorwärmer, einem Füller, einem Kühltunnel und der separaten Wärmepumpe.

Die Vorrichtung zeichnet sich in einer bevorzugten Ausführungsform dadurch aus, dass die Wärmepumpe primärseitig in einem über den ersten Vorwärmer geführten Kühlmittel-Kreislauf zwischen dem ersten Vorwärmer und dem Kühltunnel und sekundärseitig in einem über den zweiten Vorwärmer geführten Wärmeträgermittel-Kreislauf angeordnet ist.

In dieser Vorrichtung ist die Wärmepumpe vorzugsweise als elektrisch angetriebene Kompressionswärmepumpe ausgebildet, bei der das Verhältnis von elektrischer Antriebsleistung zu transferierter Wärmeleistung bis zu 1:6 beträgt. Sie arbeitet in einer bevorzugten Ausführung mit einem zweistufigen Kompressor und unter Verwendung von natürlichen Kältemitteln wie Ammoniak (NH₃) oder Kohlendioxid (CO₂), die jeweils bevorzugt im transkritischen Bereich zum Einsatz kommen.

In der erfindungsgemäßen Vorrichtung können wenigstens der Erhitzer, die Vorwärmer, der Füller und der Kühltunnel jeweils separat ausgebildet sein.

Die exakte Anpassung der ersten Kühlmittel-Temperatur (Kühlwasser-Eintrittstemperatur in den Kühltunnel) an die Temperaturerfordernissen des Kühltunnels wird nach einem weiteren Vorschlag dadurch erleichtert, dass in dem Kühlmittel-Kreislauf zwischen der Wärmpumpe und dem Kühltunnel ein erster Kühler angeordnet ist.

Die Leistungsregelung der Wärmepumpe im Rahmen sich verändernder Betriebsbedingungen wird erleichtert, wenn, wie dies ein weiterer Vorschlag vorsieht, in dem Wärmeträgermittel-Kreislauf zwischen dem Austritt aus dem zweiten Vorwärmer und dem Eintritt in die Wärmepumpe ein Kühler angeordnet ist.

Um nicht abgefülltes Lebensmittelprodukt in den Abfüllprozess im Bereich des Füllers zurückzuführen, sieht eine andere Ausgestaltung der Vorrichtung vor, dass aus einer in den Füller einmündenden Produktleitung eine Überlaufleitung abzweigt, die in einen dem ersten Vorwärmer, in Strömungsrichtung des Lebensmittelprodukts gesehen, vorgeordneten Produktbehälter einmündet. Um eine Produktschädigung durch zu lange Heißhaltung auf der Füll-Temperatur zu vermeiden, ist vorgesehen, dass in der Überlaufleitung ein zweiter Kühler angeordnet ist.

### KURZBESCHREIBUNG DER ZEICHNUNGEN

Eine eingehendere Darstellung der Erfindung ergibt sich aus der folgenden Beschreibung und den beigefügten Figuren der Zeichnung sowie aus den Ansprüchen. Während die Erfindung in den verschiedensten Ausgestaltungen eines Verfahrens zur Vorerwärmung eines pumpförmigen Lebensmittelprodukts in einer Heißabfüllanlage mit einer Wärmepumpe und in Gestalt einer Vorrichtung zur Durchführung dieses Verfahrens realisiert ist, wird in der Zeichnung, ausgehend von einer Vorrichtung nach dem Stand der Technik, eine bevorzugte Ausführungsform der erfindungsgemäßen Vorrichtung beschrieben und anhand dieser Ausführungsform das erfindungsgemäße Verfahren erläutert. Es zeigen
- **Figur 1**: in schematischer Darstellung eine Vorrichtung zur Vorwärmung und Heißabfüllung eines pumpfähigen Lebensmittelprodukts nach dem Stand der Technik und
- **Figur 2**: eine schematische Darstellung der erfindungsgemäßen Vorrichtung in einer bevorzugten Ausführungsform zur Vorwärmung eines pumpfähigen Lebensmittelprodukts in einer Heißabfüllanlage mit einer zweistufigen Vorwärmung in Verbindung mit einer Wärmepumpe, wobei die Vorrichtung von der Konfiguration gemäß Figur 1 ausgeht.

### BESCHREIBUNG

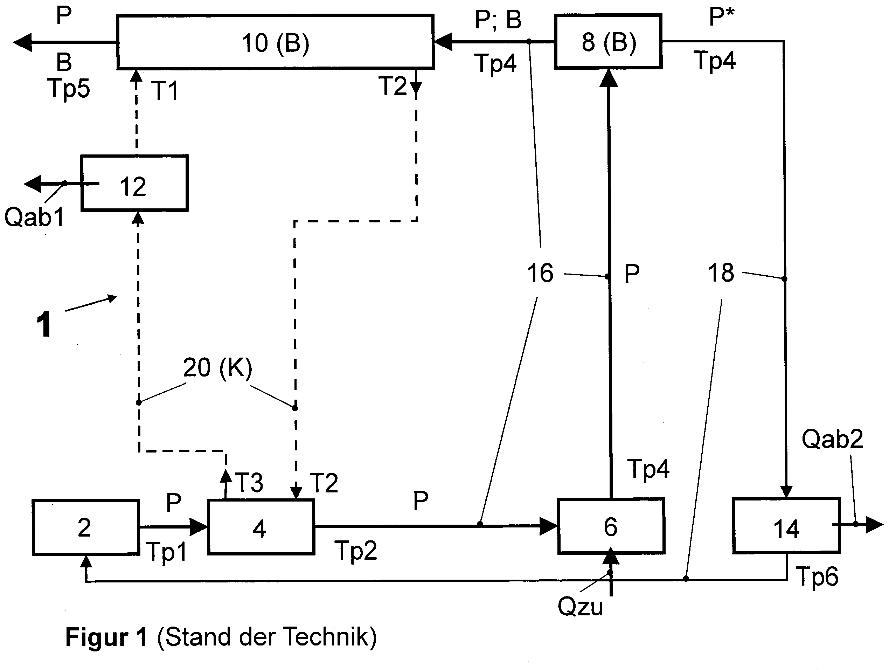

Die **Figur 1** zeigt eine Vorrichtung zur Vorwärmung und Heißabfüllung eines pumpfähigen Lebensmittelprodukts P, eine sogenannte Heißabfüllanlage 1, wie sie aus dem Stand der Technik bekannt ist. Das Lebensmittelprodukt P wird beispielsweise mit einer nicht bezeichneten Ausgangs-Temperatur (z.B. 15 °C) chargenweise in einem Produktbehälter 2 gestapelt oder diesem in seiner Funktion als Pufferbehälter über eine nicht dargestellte Zuleitung zugeführt. Nicht abgefülltes heißes Lebensmittelprodukt P, das, wie später noch beschrieben, in den Produktbehälter 2 zurückgeführt wird, erhöht die Austrittstemperatur aus letzterem, eine erste Produkt-Temperatur Tp1 (z.B. auf Tp1 = 16 - 17 °C). Der Produktbehälter 2 ist über eine Produktleitung 16 mit einem Vorwärmer 4 zur Vorwärmung für das Lebensmittelprodukt P auf eine zweite Produkt -Temperatur Tp2 (Austrittstemperatur aus dem Vorwärmer 4; z.B. 60 °C) und einem diesem nachgeordneten Erhitzer 6 zur Erhitzung des Lebensmittelprodukts P auf eine Füll-Temperatur Tp4 (vierte Produkt-Temperatur; z.B. 80 - 90 °C) verbunden. Zur Erhitzung auf die Füll-Temperatur Tp4 ist eine zuzuführende Wärmemenge Qzu erforderlich, die beispielsweise über Dampf oder Druckheißwasser bereitgestellt wird. Vom Erhitzer 6 gelangt das heiße Lebensmittelprodukt P über einen weiteren Abschnitt der Produktleitung 16 zu einem Füller 8, wo es auf Behältnisse B, beispielsweise Flaschen, Beutel oder Kunststoffbehältnisse, abgefüllt wird.

Die heiß abgefüllten und anschließend verschlossenen Behältnisse B gelangen in einen Kühltunnel 10, der beispielsweise aus mehreren in Durchlaufrichtung nebeneinander angeordneten Kühlzellen bestehen kann, und werden dort im Durchlauf mittels eines Kühlmittels K, beispielsweise Wasser, durch Berieselung auf eine zur Lagerung und/oder Weiterverarbeitung geeignete fünfte Produkt-Temperatur Tp5 (z.B. 20 - 30 °C) gekühlt. Das Kühlmittel K wird dabei in einem Kühlmittel-Kreislauf 20, der über den Vorwärmer 4 und den Kühltunnel 10 geführt ist, umgewälzt, wobei das kalte Kühlmittel K mit einer ersten Kühlmittel-Temperatur T1 (Kühlwasser-Eintrittstemperatur; z.B. 10 °C) dort in den Kühltunnel 10 eintritt, wo die auf die fünfte Produkt-Temperatur Tp5 abgekühlten Behältnisse B aus diesem austreten. Das in den Kühltunnel 10 eintretenden Kühlmittel K nimmt dabei Wärme aus den abzukühlenden Behältnissen B auf und erwärmt sich dabei auf eine zweite Kühlmittel-Temperatur T2 (Kühlwasser-Austrittstemperatur; z.B. 68 °C). Zur Nutzung dieser Wärme wird das Kühlmittel K im Kreislauf über den Vorwärmer 4 gegen das zu erwärmende Lebensmittelprodukt P gefahren. Den jeweiligen Mengenstrom- und Temperaturverhältnissen entsprechend erwärmt sich das Lebensmittelprodukt P dabei auf die zweite Produkt-Temperatur Tp2, während das Kühlmittel K eine Abkühlung auf eine dritte Kühlmittel-Temperatur T3 (Vorwärmer-Austrittstemperatur; z.B. 28 °C) erfährt.

Die Rückkühlung des Kühlmittels K im Kühlmittel-Kreislauf 20 erfolgt beispielsweise in einem Wärmetauscher, einem ersten Kühler 12, der beispielsweise mit Kühlturmwasser betrieben wird. Die vom ersten Kühler 12 abzuführende erste Wärmemenge Qab1 ist als Verlust anzusehen.

Aus dem in den Füller 8 einmündenden Abschnitt der Produktleitung 16 zweigt eine Überlaufleitung 18 ab, die in den Produktbehälter 2 einmündet und über die nicht abgefülltes Lebensmittelprodukt P, ein überlaufendes Lebensmittelprodukt P*, in den Abfüllprozess zurückgeführt wird. Die Rückkühlung des überlaufenden Lebensmittelprodukts P* auf eine geeignete sechste Produkt-Temperatur Tp6 (Rückführ-Temperatur; z.B. 35 °C) erfolgt beispielsweise ebenfalls in einem weiteren Wärmetauscher, einem zweiten Kühler 14, der in gleicher Weise, wie vorstehend beschrieben, betrieben werden kann. Die vom zweiten Kühler 14 abzuführende zweite Wärmemenge Qab2 ist ebenfalls als Verlust anzusehen.

Jene Wärmemenge des Lebensmittelprodukts P, die durch die Temperaturdifferenz (ΔT = Tp4 - Tp2 = 20 - 30 °C) zwischen seiner erforderlichen Füll-Temperatur Tp4 (z.B. Tp4 = 80 - 90 °C) und seiner durch das im Kreislauf geführte Kühlmittel K erreichbaren Vorwärmtemperatur, der zweiten Produkt-Temperatur Tp2 (Austrittstemperatur aus dem Vorwärmer 4; z.B. Tp2 = 60 °C) repräsentiert wird, ist grundsätzlich als Verlustwärme anzusehen und findet im Wesentlichen in den vorstehend erwähnten Verlusten Qab1, Qab2 ihre konkrete Ausprägung. Die Verwendung eines Kühlturms zur Rückkühlung des im Kreislauf geführten Kühlmittels K bzw. zur Vorkühlung von frischem Kühlmittel ist wegen des Temperaturniveaus der über die Umgebung bereitstellbaren Kühlmedien technisch limitiert. Die vorgenannten Temperaturangaben sollen rein beispielhaft verstanden werden und können, abhängig von der Auslegung der Vorrichtung, auch andere Werte annehmen.

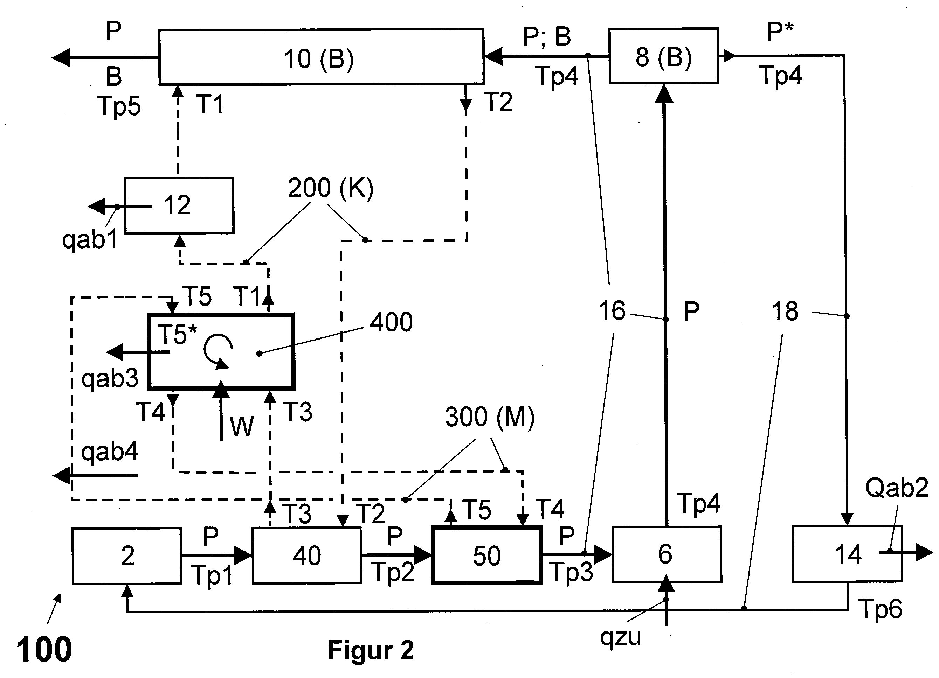

**Figur 2** zeigt eine Vorrichtung zur Vorwärmung und Heißabfüllung eines pumpfähigen Lebensmittelprodukts P, eine Heißabfüllanlage 100, entsprechend der vorliegenden Erfindung. Ihr Aufbau und die Anordnung der Aggregate, wie Produktbehälter 2, Erhitzer 6, Füller 8, Kühltunnel 10, die Kühler 12, 14 und die Leitungsführung mit der Produkt- und der Überführungsleitung 16, 18 entsprechen dem Aufbau und der Anordnung gemäß **Figur 1** (Stand der Technik). Die bereits eingeführten Temperaturen Tp1 und Tp2 und Tp4 bis Tp6 und T1 bis T3 sowie die abzuführende zweite Wärmemenge Qab2 und die Bezeichnungen für die Behältnisse B, das Kühlmittel K, das Lebensmittelprodukt P und das überlaufenden Lebensmittelprodukt P* wurden an den zugeordneten Stellen unverändert übernommen.

An die Stelle des Vorwärmers 4 tritt in **Figur 2** ein erster Vorwärmer 40. Der nunmehr über den ersten Vorwärmer 40 und den Kühltunnel 10 geführte Kühlmittel-Kreislauf trägt die Bezeichnung 200.

Die Heißabfüllanlage 100 geht von einem Stand der Technik aus, wie er in der EP 2 532 247 A1 offenbart ist. Dieser offenbart im Vergleich zu dem Stand der Technik gemäß der vorstehend beschriebenen Figur 1 eine separate Wärmepumpe, die die Restwärmeenergie eines aus einem Vorwärmer abströmenden Kühlmittels primärseitig dazu benutzt, um mit einem Wärmeträgermittel, das in einem Wärmeträgermittel-Kreislauf sekundärseitig über die Wärmepumpe geführt ist, die Temperatur des vorgewärmten Lebensmittelprodukts auf die Füll-Temperatur zu erhöhen. Die Wärmepumpe in der bekannten Produktvorwärmung ist somit allein für das Erreichen der Fülltempertur verantwortlich.

Die Heißabfüllanlage 100 zeichnet sich erfindungsgemäß dadurch aus, dass eine Wärmepumpe 400 primärseitig in dem über den ersten Vorwärmer 40 geführten Kühlmittel-Kreislauf 200 für das Kühlmittel K zwischen dem ersten Vorwärmer 40 und dem Kühltunnel 10 und sekundärseitig in einem über einen zweiten Vorwärmer 50 geführten Wärmeträgermittel-Kreislauf 300 für ein Wärmeträgermittel M angeordnet ist. Dabei ist der zweite Vorwärmer 50, in Strömungsrichtung des Lebensmittelprodukts P gesehen, dem ersten Vorwärmer 40 nachgeschaltet und dem Erhitzer 6 vorgeschaltet. Auf diese Weise erfolgt in dem zweiten Vorwärmer 50 mit der von der Wärmepumpe 400 sekundärseitig mittels des Wärmeträgermittels M bereitgestellten Wärmeenergie eine weitere Vorwärmung des Lebensmittelprodukts P von der zweiten Produkt-Temperatur Tp2 (z.B. 60 °C) auf eine dritte Produkt-Temperatur Tp3 (z.B. 75 °C) und damit auf eine Temperatur unterhalb der Füll-Temperatur Tp4 (z.B. 85 °C).

Dadurch wird dem Rücklauf des Kühlmittel-Kreislaufs 200 nach dem ersten Vorwärmer 40, in den das Kühlmittel K mit der zweiten Kühlmittel-Temperatur T2 (z.B. 68 °C) eintritt und aus dem letzteres mit der dritten Kühlmittel-Temperatur T3 (z.B. 28 °C) austritt, mittels der Primärseite der Wärmepumpe 400 Wärme entzogen (Kühlen) und mittels der Sekundärseite der Wärmepumpe 400 Wärme auf den Wärmeträgermittel-Kreislauf 300 übertragen (Heizen). Durch die Entnahme der Wärme durch die Wärmepumpe 400 wird das Kühlmittel K im Kühlmittel-Kreislauf 200 von der dritten Kühlmittel-Temperatur T3 auf die erste Kühlmittel-Temperatur T1 (z.B. 10 °C) abgekühlt und gleichzeitig wird durch die Wärmepumpe 400 unter Zuführung einer elektrischen Antriebsarbeit W das Wärmeträgermittel M im Wärmeträgermittel-Kreislauf 300 auf ein zur weiteren Vorwärmung des Lebensmittelprodukts P im zweiten Vorwärmer 50 nutzbares Temperaturniveau so weit aufgeheizt, dass eine höchstmögliche Leistungszahl der Wärmepumpe 400 sichergestellt ist. Das Wärmeträgermittel M verlässt die Wärmepumpe 400 mit einer ersten Wärmeträgermittel-Temperatur T4 (z.B. 81 °C) und tritt mit dieser in den zweiten Vorwärmer 50 ein. Nach der Wärmeabgabe an das Lebensmittelprodukt P verlässt das Wärmeträgermittel M den zweiten Vorwärmer 50 mit einer zweiten Wärmeträgermittel-Temperatur T5 (z.B. 68 °C), die, wenn keine weitere externe Kühlung erfolgt, den sekundärseitigen Eintritt der Wärmepumpe 400 beaufschlagt. An der Wärmepumpe 400 ist eine thermodynamisch zwangsläufig bedingte abzuführende dritte Wärmemenge qab3 als Verlustwärmemenge abzuführen.

Die Leistungsregelung der Wärmepumpe 400 im Rahmen sich verändernder Betriebsbedingungen wird erleichtert, wenn, wie dies vorgesehen ist, in dem Wärmeträgermittel-Kreislauf 300 zwischen dem Austritt aus dem zweiten Vorwärmer 50 und dem Eintritt in die Wärmepumpe 400 ein nicht bezeichneter Kühler angeordnet ist, der das Wärmeträgermittel M von der zweiten Wärmeträgermittel-Temperatur T5 auf eine abgesenkte zweite Wärmeträgermittel-Temperatur T5* (z.B. 62 - 63 °C) mittels einer abzuführenden vierten Wärmemenge qab4 abkühlen kann.

Die exakte Anpassung der ersten Kühlmittel-Temperatur T1 an die Temperaturerfordernissen des Kühltunnels 10 wird nach einem weiteren Vorschlag dadurch erleichtert, dass in dem Kühlmittel-Kreislauf 200 zwischen der Wärmpumpe 400 und dem Kühltunnel 10 der erste Kühler 12 angeordnet ist, über den im Falle einer notwendigen Anpassung eine gegenüber dem Stand der Technik gemäß Figur 1 wesentlich geringere abzuführende erste Wärmemenge qab1 abzuführen ist.

Da nunmehr das aus dem zweiten Vorwärmer 50 austretende vorgewärmte Lebensmittelprodukt P mit der dritten Produkt-Temperatur Tp3 in den Erhitzer 6 eintritt, die deutlich höher ist als die zweite Produkt-Temperatur Tp2, die Austrittstemperatur aus dem Vorwärmer 4 in der Heißabfüllanlage 1 gemäß dem Stand der Technik (Figur 1), nämlich z.B. Tp3 = 75 °C gegenüber z.B. Tp2 = 60 °C, jedoch noch unterhalb der Füll-Temperatur Tp4 (z.B. 85 °C) bleibt, ist eine dem Erhitzer 6 notwendigerweise von außen zuzuführende Wärmemenge qzu entsprechend niedriger als dies bei der herkömmlichen bekannten Heißabfüllanlage 1 der Fall ist (Qzu gemäß Figur 1). Die vorgenannten Temperaturangaben sollen rein beispielhaft verstanden werden. Sie sind von der Auslegung der Wärmepumpe 400, deren Funktionsweise und Leistungszahl sowie von der Auslegung der anderen Aggregate der Heißabfüllanlage 100 abhängig.

In der erfindungsgemäßen Vorrichtung können der Erhitzer 6, die Vorwärmer 40, 50, der Füller 8 und der Kühltunnel 10 sowie der erste und der zweite Kühler 12, 14 jeweils separat ausgebildet sein.

### BEZUGSZEICHENLISTE DER VERWENDETEN ABKÜRZUNGEN

### (Figur 1) Stand der Technik (ohne Wärmepumpe)

- **1**: Heißabfüllanlage
- 2: Produktbehälter
- 4: Vorwärmer
- 6: Erhitzer
- 8: Füller
- 10: Kühltunnel
- 12: erster Kühler
- 14: zweiter Kühler
- 16: Produktleitung
- 18: Überlaufleitung
- 20: Kühlmittel-Kreislauf

- B: Behältnis
- K: Kühlmittel (z.B. Wasser)
- P: Lebensmittelprodukt
- P*: überlaufendes Lebensmittelprodukt

- Qab1: abzuführende erste Wärmemenge
- Qab2: abzuführende zweite Wärmemenge
- Qzu: zuzuführende Wärmemenge

- Tp1: erste Produkt-Temperatur
- Tp2: zweite Produkt-Temperatur (Austrittstemperatur aus (erstem) Vorwärmer 4, (40))
- Tp4: Füll-Temperatur (vierte Produkt-Temperatur)
- Tp5: fünfte Produkt-Temperatur
- Tp6: sechste Produkt-Temperatur (Rückführ-Temperatur)

- T1: erste Kühlmittel-Temperatur (Kühlwasser-Eintrittstemperatur)
- T2: zweite Kühlmittel-Temperatur (Kühlwasser-Austrittstemperatur)
- T3: dritte Kühlmittel-Temperatur (Vorwärmer-Austrittstemperatur)

### Figur 2 (Bezeichnungen, zusätzlich oder alternativ zu Figur 1)

- **100**: Heißabfüllanlage
- 40: erster Vorwärmer
- 50: zweiter Vorwärmer
- 200: Kühlmittel-Kreislauf
- 300: Wärmeträgermittel-Kreislauf
- 400: Wärmepumpe (einstufig oder zweistufig)

- qab1: abzuführende erste Wärmemenge
- qab3: abzuführende dritte Wärmemenge
- qab4: abzuführende vierte Wärmemenge
- qzu: zuzuführende Wärmemenge

- M: Wärmeträgermittel

- Tp3: dritte Produkt-Temperatur (Eintrittstemperatur in Erhitzer 6)

- T4: erste Wärmeträgermittel-Temperatur
- T5: zweite Wärmeträgermittel-Temperatur
- T5*: abgesenkte zweite Wärmeträgermittel-Temperatur

- W: Antriebsarbeit

## Patentansprüche

1. Verfahren zur Vorerwärmung eines pumpfähigen Lebensmittelprodukts (P) in einer Heißabfüllanlage, mit einem Erhitzer (6) zur Erhitzung des Lebensmittelprodukts (P) auf eine Füll-Temperatur (Tp4), einem dem Erhitzer (6) vorgeschalteten Vorwärmer (4, 40) zur Vorwärmung für das Lebensmittelprodukt (P), einem Füller (8) zum Abfüllen des Lebensmittelprodukts (P) in Behältnisse (B), einem Kühltunnel (10) zur Abkühlung der heiß abgefüllten Behältnisse (B) mit einem Kühlmittel (K), das in einem Kühlmittel-Kreislauf (20, 200) über den Vorwärmer (4, 40) und den Kühltunnel (10) geführt wird, mit dem Vorwärmer (4, 40), der Wärmeenergie des bei der Abkühlung der Behältnisse (B) erwärmten Kühlmittels (K) des Kühltunnels (10) dem Lebensmittelprodukt (P) zuführt, mit einer separaten Wärmepumpe (400), die die Restwärmeenergie des aus dem Vorwärmer (4, 40) abströmenden Kühlmittels (K) primärseitig dazu benutzt, um mit einem Wärmeträgermittel (M), das in einem Wärmeträgermittel-Kreislauf (300) sekundärseitig über die Wärmepumpe (400) geführt ist, die Temperatur des vorgewärmten Lebensmittelprodukts (P) weiter zu erhöhen,
**dadurch gekennzeichnet,**
**dass** der Wärmeträgermittel-Kreislauf (300) über einen dem ersten Vorwärmer (40) nachgeschalteten und dem Erhitzer (6) vorgeschalteten zweiten Vorwärmer (50) für das Lebensmittelprodukt (P) geführt ist, wobei in dem zweiten Vorwärmer (50) mit der von der Wärmepumpe (400) sekundärseitig mittels des Wärmeträgermittels (M) bereitgestellten Wärmeenergie eine weitere Vorwärmung des Lebensmittelprodukts (P) auf eine Temperatur unterhalb der Füll-Temperatur (Tp4) erfolgt.

2. Verfahren nach Anspruch 1,
**dadurch gekennzeichnet,**
**dass** die Wärmepumpe (400) als zweistufige Kompressionswärmepumpe ausgebildet und gleichzeitig zum Heizen und zum Kühlen befähigt ist.

3. Verfahren nach Anspruch 1 oder 2,
**dadurch gekennzeichnet,**
**dass** als Kältemittel für die Wärmepumpe (400) Ammoniak (NH₃) oder Kohlendioxid (CO₂) vorgesehen ist.

4. Verfahren nach einem der vorhergehenden Ansprüche,
**dadurch gekennzeichnet,**
**dass** die Erhitzung des Lebensmittelprodukts (P) auf die Füll-Temperatur (Tp4) in dem Erhitzer (6) mittels extern zugeführter Wärmeenergie erfolgt.

5. Verfahren nach einem der vorhergehenden Ansprüche,
**dadurch gekennzeichnet,**
**dass** im Kühlmittel-Kreislauf (200) zwischen Wärmepumpe (400) und Kühltunnel (10) ein erster Kühler (12) vorgesehen ist, der bei Bedarf eine zum Betrieb des Kühltunnels (10) erforderliche erste Kühlmittel-Temperatur (T1) bereitstellt.

6. Verfahren nach einem der vorhergehenden Ansprüche,
**dadurch gekennzeichnet,**
**dass** im Wärmeträgermittel-Kreislauf (300) zwischen dem zweiten Vorwärmer (50) und der Wärmepumpe (400) eine Kühlung des Wärmeträgermittels (M) auf eine abgesenkte zweite Wärmeträgermittel-Temperatur (T5*) vorgesehen ist.

7. Verfahren nach einem der vorhergehenden Ansprüche,
**dadurch gekennzeichnet,**
**dass** durch Leistungsregelung der Wärmepumpe (400) eine Anpassung des Verfahrens an variable Verfahrensparameter durchgeführt wird.

8. Verfahren nach einem der vorhergehenden Ansprüche,
**dadurch gekennzeichnet,**
**dass** das Lebensmittelprodukt (P) ein Getränk oder ein Saft ist.

9. Vorrichtung zur Vorerwärmung eines pumpfähigen Lebensmittelprodukts (P) in einer Heißabfüllanlage (100) mit einem Erhitzer (6), einem, in Fließrichtung des Lebensmittelprodukts (P) gesehen, diesem vorgeschalteten zweiten Vorwärmer (50), einem letzteren vorgeschalteten ersten Vorwärmer (40), einem Füller (8), einem Kühltunnel (10) und mit einer der separaten Wärmepumpe (400), zur Durchführung des Verfahrens zur Vorerwärmung eines pumpfähigen Lebensmittelprodukts (P) nach einem der Ansprüche 1 bis 8.

10. Vorrichtung nach Anspruch 9,
**dadurch gekennzeichnet,**
**dass** die Wärmepumpe (400) primärseitig in einem über den ersten Vorwärmer (40) geführten Kühlmittel-Kreislauf (200) zwischen dem ersten Vorwärmer (40) und dem Kühltunnel (10) und sekundärseitig in einem über den zweiten Vorwärmer (50) geführten Wärmeträgermittel-Kreislauf (300) angeordnet ist.

11. Vorrichtung nach Anspruch 9 oder 10,
**dadurch gekennzeichnet,**
**dass** die Wärmepumpe (400) als elektrisch angetriebene Kompressionswärmepumpe ausgebildet ist, bei der das Verhältnis von elektrischer Antriebsleistung zu transferierter Wärmeleistung bis zu 1:6 beträgt.

12. Vorrichtung nach einem der Ansprüche 9 bis 11,
**dadurch gekennzeichnet,**
**dass** wenigstens der Erhitzer (6), die Vorwärmer (40, 50), der Füller (8) und der Kühltunnel (10) jeweils separat ausgebildet sind.

13. Vorrichtung nach einem der Ansprüche 9 bis 12,
**dadurch gekennzeichnet,**
**dass** in dem Kühlmittel-Kreislauf (200) zwischen der Wärmpumpe (400) und dem Kühltunnel (10) ein erster Kühler (12) angeordnet ist.

14. Vorrichtung nach einem der Ansprüche 9 bis 13,
**dadurch gekennzeichnet,**
**dass** in dem Wärmeträgermittel-Kreislauf (300) zwischen dem Austritt aus dem zweiten Vorwärmer (50) und dem Eintritt in die Wärmepumpe (400) ein Kühler angeordnet ist.

15. Vorrichtung nach einem der Ansprüche 9 bis 14,
**dadurch gekennzeichnet,**
**dass** aus einer in den Füller (8) einmündenden Produktleitung (16) eine Überlaufleitung (18) abzweigt, die in einen dem ersten Vorwärmer (40), in Strömungsrichtung des Lebensmittelprodukts (P) gesehen, vorgeordneten Produktbehälter (2) einmündet.

16. Vorrichtung nach Anspruch 15,
**dadurch gekennzeichnet,**
**dass** in der Überlaufleitung (18) ein zweiter Kühler (14) angeordnet ist.

## Claims

1. A method for preheating a pumpable food product (P) in a hot filling system with a heater (6) for heating the food product (P) to a filling temperature (Tp4), a preheater (4, 40) upstream from the heater (6) for preheating the food product (P), a filler (8) for adding the food product (P) to containers (B), a cooling tunnel (10) for cooling the hot-filled containers (B) with a coolant (K) which is conducted in a coolant circuit (20, 200) through the preheater (4, 40) and the cooling tunnel (10), with the preheater (4, 40) that supplies to the food product (P) the thermal energy of the coolant (K) from the cooling tunnel (10) which is heated while cooling the containers (B), with a separate heat pump (400) which uses the residual thermal energy from the coolant (K) flowing out of the preheater (4, 40) on the primary side to further increase the temperature of the preheated food product (P) with a heat carrier means (M) that is conducted through the heat pump (400) on the secondary side in a heat carrier means circuit (300),
**characterized in that**
the heat carrier means circuit (300) is conducted through a second preheater (50) for the food product (P) downstream from the first preheater (40) and upstream from the heater (6), wherein the food product (P) is additionally preheated to a temperature below the filling temperature (Tp4) in the second preheater (50) with the thermal energy provided by the heat pump (400) on the secondary side by means of the heat carrier means (M).

2. The method according to claim 1,
**characterized in that**
the heat pump (400) is designed as a two-stage compressor heat pump and is capable of simultaneously heating and cooling.

3. The method according to claim 1 or 2,
**characterized in that**
ammonia (NH₃) or carbon dioxide (CO₂) is provided as the coolant for the heat pump (400).

4. The method according to one of the preceding claims,
**characterized in that**
the food product (P) is heated to the filling temperature (Tp4) in the heater (6) by means of externally supplied thermal energy.

5. The method according to one of the preceding claims,
**characterized in that**
a first cooler (12) is provided in the coolant circuit (200) between the heat pump (400) and cooling tunnel (10) that provides, if needed, a first coolant temperature (T1) required to operate the cooling tunnel (10).

6. The method according to one of the preceding claims,
**characterized in that**
cooling of the heat carrier means (M) to a reduced, second heat carrier means temperature (T5*) is provided in the heat carrier means circuit (300) between the second preheater (50) and the heat pump (400).

7. The method according to one of the preceding claims,
**characterized in that**
an adaptation of the method to variable method parameters is accomplished by controlling the output of the heat pump (400).

8. The method according to one of the preceding claims,
**characterized in that**
the food product (P) is a beverage or juice.

9. A device for preheating a pumpable food product (P) in a hot filling system (100) with a heater (6), a second preheater (50) upstream therefrom viewed in the direction of flow of the food product (P), a first preheater (40) upstream from the latter, a filler (8), a cooling tunnel (10), and with a separate heat pump (400) to perform the method for preheating a pumpable food product (P) according to one of claims 1 to 8.

10. The device according to claim 9,
**characterized in that**
the heat pump (400) is arranged on the primary side in a coolant circuit (200) conducted through the first preheater (40) between the first preheater (40) and the cooling tunnel (10), and on the secondary side in a heat carrier means circuit (300) conducted through the second preheater (50).

11. The device according to claim 9 or 10,
**characterized in that**
the heat pump (400) is designed as an electrically driven compression heat pump in which the ratio of electrical drive output to transferred thermal output is up to 1:6.

12. The device according to one of the claims 9 to 11,
**characterized in that**
at least the heater (6), the preheater (40, 50), the filler (8) and the cooling time (10) are each designed separately.

13. The device according to one of the claims 9 to 12,
**characterized in that**
a first cooler (12) is arranged in the coolant circuit (200) between the heat pump (400) and the cooling tunnel (10).

14. The device according to one of the claims 9 to 13,
**characterized in that**
a cooler is arranged in the heat carrier means circuit (300) between the outlet out of the second preheater (50) and the inlet into the heat pump (400).

15. The device according to one of the claims 9 to 14,
**characterized in that**
an overflow line (18) branches from a product line (16) ending in the filler (8), and ends in a product container (2) that is upstream from the first preheater (40) viewed in the direction of flow of the food product (P).

16. The device according to claim 15,
**characterized in that**
a second cooler (14) is arranged in the overflow line (18).

## Revendications

1. Procédé pour le préchauffage d'un produit alimentaire (P) apte à être pompé dans une installation de soutirage à chaud, comprenant un réchauffeur (6) destiné à réchauffer le produit alimentaire (P) à une température de remplissage (Tp4), un préchauffeur (4, 40) monté en amont du réchauffeur (6), pour le préchauffage du produit alimentaire (P), un dispositif de remplissage (8) pour le remplissage du produit alimentaire (P) dans des récipients (B), un tunnel de refroidissement (10) pour le refroidissement des récipients (B) remplis à chaud avec un fluide réfrigérant (K), lequel est guidé à travers le préchauffeur (4, 40) et le tunnel de refroidissement (10) dans un circuit de fluide réfrigérant (20, 200), le préchauffeur (4, 40) alimentant l'énergie thermique du fluide réfrigérant (K) du tunnel de refroidissement (10) réchauffé pendant le refroidissement des récipients (B) vers le produit alimentaire (P), une thermopompe (400) séparée utilisant l'énergie thermique résiduelle du fluide réfrigérant (K) sortant du préchauffeur (4, 40) côté primaire pour augmenter davantage la température du produit alimentaire (P) préchauffé, à l'aide d'un fluide caloporteur (M) guidé côté secondaire à travers la thermopompe (400) dans un circuit de fluide caloporteur (300),
**caractérisé en ce que**
le circuit de fluide caloporteur (300) est guidé à travers un deuxième préchauffeur (50) installé en aval du premier préchauffeur (40) et en amont du réchauffeur (6) pour le produit alimentaire (P), un préchauffage supplémentaire du produit alimentaire (P) à une température inférieure à la température de remplissage (Tp4) étant réalisé dans le deuxième préchauffeur (50) à l'aide de l'énergie thermique mise à disposition côté secondaire par la thermopompe (400) au moyen du fluide caloporteur (M).

2. Procédé selon la revendication 1,
**caractérisé en ce que**
la thermopompe (400) est conçue comme une thermopompe à compression à deux niveaux, et intervient aussi bien dans le chauffage que dans le refroidissement.

3. Procédé selon la revendication 1 ou 2,
**caractérisé en ce que**
le fluide réfrigérant utilisé pour la thermopompe (400) est de l'ammoniaque (NH₃) ou du dioxyde de carbone (CO₂).

4. Procédé selon l'une des revendications précédentes,
**caractérisé en ce que**
le réchauffage du produit alimentaire (P) à la température de remplissage (Tp4) dans le réchauffeur (6) est réalisé avec de l'énergie thermique alimentée depuis l'extérieur.

5. Procédé selon l'une des revendications précédentes,
**caractérisé en ce que**
dans le circuit de fluide réfrigérant (200) entre la thermopompe (400) et le tunnel de refroidissement (10), il est prévu un premier dispositif de refroidissement (12) mettant à disposition une première température de fluide réfrigérant (T1) nécessaire au fonctionnement du tunnel de refroidissement (10) en cas de besoin.

6. Procédé selon l'une des revendications précédentes,
**caractérisé en ce que**
dans le circuit de fluide caloporteur (300) entre le deuxième préchauffeur (50) et la thermopompe (400), il est prévu un refroidissement du fluide caloporteur (M) à une deuxième température de fluide caloporteur réduite (T5*).

7. Procédé selon l'une des revendications précédentes,
**caractérisé en ce qu'**
un réglage de la puissance de la thermopompe (400) permet d'adapter le procédé en fonction de différents paramètres de procédé.

8. Procédé selon l'une des revendications précédentes,
**caractérisé en ce que**
le produit alimentaire (P) est une boisson ou un jus.

9. Dispositif pour le préchauffage d'un produit alimentaire apte à être pompé (P) dans une installation de soutirage à chaud (100) comprenant un réchauffeur (6), un deuxième préchauffeur (50) monté en amont de celui-ci dans la direction d'écoulement du produit alimentaire (P), un premier préchauffeur (40) monté en amont de ce dernier, un dispositif de remplissage (8), un tunnel de refroidissement (10), et une thermopompe (400) séparée, pour l'exécution du procédé pour le préchauffage d'un produit alimentaire apte à être pompé (P) selon l'une des revendications 1 à 8.

10. Dispositif selon la revendication 9,
**caractérisé en ce que**
la thermopompe (400) est disposée côté primaire entre le premier préchauffeur (40) et le tunnel de refroidissement (10) dans un circuit de fluide réfrigérant (200) passant par le premier préchauffeur (40) et côté secondaire dans un circuit de fluide caloporteur (300) passant par le deuxième préchauffeur (50).

11. Dispositif selon la revendication 9 ou 10,
**caractérisé en ce que**
la thermopompe (400) est conçue comme une thermopompe à compression entraînée électriquement, dans laquelle le rapport de la puissance d'entraînement électrique à la puissance thermique transférée va jusqu'à 1:6.

12. Dispositif selon l'une des revendication 9 à 11,
**caractérisé en ce qu'**
au moins le réchauffeur (6), le préchauffeur (40, 50), le dispositif de remplissage (8) et le tunnel de refroidissement (10) sont respectivement conçus séparément.

13. Dispositif selon l'une des revendications 9 à 12,
**caractérisé en ce qu'**
un premier dispositif de refroidissement (12) est installé entre la thermopompe (400) et le tunnel de refroidissement (10) dans le circuit de fluide réfrigérant (200).

14. Dispositif selon l'une des revendications 9 à 13,
**caractérisé en ce qu'**
un dispositif de refroidissement est installé entre la sortie du deuxième préchauffeur (50) et l'entrée de la thermopompe (400) dans le circuit de fluide caloporteur (300).

15. Dispositif selon l'une des revendications 9 à 14,
**caractérisé en ce qu'**
une conduite de trop-plein (18) bifurque à partir d'une conduite de produit (16) débouchant dans le dispositif de remplissage (8), et débouche dans un récipient de produit (2) disposé en amont du premier préchauffeur (40) dans la direction d'écoulement du produit alimentaire (P).

16. Dispositif selon la revendication 15,
**caractérisé en ce qu'**
un deuxième dispositif de refroidissement (14) est installé dans la conduite de trop-plein (18).
